# EUROPÄISCHE PATENTSCHRIFT

(11) **EP 2 772 375 B1**
(45) Veröffentlichungstag und Bekanntmachung des Hinweises auf die Patenterteilung: **18.10.2017**
(21) Anmeldenummer: 13156989.9
(22) Anmeldetag: 27.02.2013
(51) Int. Cl.: B60H 1/00, B60H 1/22, F24H 3/04, F24H 9/20, G05D 23/19, G05D 23/20, H05B 3/42

(54) **Elektrische Heizvorrichtung für ein Kraftfahrzeug**
Electrical heating device for a motor vehicle
Dispositif de chauffage électrique pour un véhicule automobile

(43) Veröffentlichungstag der Anmeldung: 03.09.2014
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 249 618
- DE-A1- 19 918 906
- US-A1- 2005 061 798

## Beschreibung

Die vorliegende Erfindung betrifft eine elektrische Heizvorrichtung für ein Kraftfahrzeug. Insbesondere betrifft die vorliegende Erfindung eine elektrische Heizvorrichtung mit PTC-Heizelementen zur Erwärmung eines Luftstroms, die mit einer Überhitzungs-Schutzeinrichtung ausgestattet ist.

Es ist bekannt, dass elektrische Heizungen im Kraftfahrzeug zum Beispiel als Zusatzheizer zum Einsatz kommen, um die Beheizung des Kraftfahrzeuginnenraums und anderer Komponenten, die primär durch die Abwärme des Motors erfolgt, zu ergänzen, oder zum Beispiel auch ein Heizen im Stillstand des Fahrzeugs zu ermöglichen.

Im Stand der Technik ist bekannt, für diese Zwecke elektrische Heizvorrichtungen mit sogenannten Widerstandsheizelementen, auch bezeichnet als PTC (positive temperature coefficient)-Heizelemente einzusetzen. Diese sind selbstregelnd, da sie mit zunehmender Erwärmung einen höheren Widerstand zeigen, und deshalb bei gleicher Spannung eine geringere Menge an Strom durchlassen. Somit heizen sich die PTC-Elemente maximal auf eine definierte Temperatur auf. Die selbstregelnden Eigenschaften der PTC-Heizelemente verhindern deshalb eine Überhitzung. Die Oberflächentemperatur eines PTC-Elementes kann eine bestimmte maximale Oberflächentemperatur im Betrieb mit der vorgegebenen Betriebsspannung nicht überschreiten. Diese maximale Oberflächentemperatur ist kennzeichnend für ein PTC-Heizelement. Die von den PTC-Elementen erzeugte Wärme wird an ein fluides Medium, insbesondere an einen Luftstrom oder einen Wasserstrom abgegeben. Die vorliegende Erfindung betrifft Heizvorrichtungen, bei denen ein Luftstrom als Wärmeträger dient.

Von besonderer Bedeutung sind elektrische Heizungen bei Fahrzeugen mit Elektro- oder Hybridantrieb, bei denen die Antriebseinheit des Kraftfahrzeugs keine oder keine ausreichende Abwärme zur Erwärmung oder Klimatisierung des Fahrzeugs abgibt. Hierfür sind Luftheizungen besonders geeignet, da diese durch eine direkte Beheizung der Luft ohne Zwischenschaltung eines Wasserwärmetauschers einen hohen Wirkungsgrad erreichen und kompakt gestaltet werden können. Weiterhin ist es von Vorteil, wenn sich eine Heizvorrichtung für Elektro- oder Hybridfahrzeuge dazu eignet, neben der Versorgung des Innenraums des Kraftfahrzeugs mit der erforderlichen Heizwärme auch die für die ablaufenden Prozesse in einzelnen Anlagenteilen des Kraftfahrzeugs erforderliche oder zumindest diese fördernde Wärme bereitzustellen, wie zum Beispiel zur Vorwärmung des Fahrzeugakkumulators.

Elektrische Heizvorrichtungen für ein Elektro- oder Hybridfahrzeug müssen deshalb leistungsstärker dimensioniert sein als PTC-Heizvorrichtungen, die zum Beispiel als Zusatzheizer in einem herkömmlichen Kraftfahrzeug zum Einsatz kommen, und weisen daher eine Reihe von Besonderheiten auf.

Zunächst sind die in Elektro- und Hybridfahrzeugen verwendeten Heizvorrichtungen für eine Betriebsspannung im automobiltechnischen Hochvoltbereich (oberhalb von 60 Volt, vorzugsweise einige hundert Volt, bis zu 500 Volt, üblicherweise zwischen 280 Volt und 430 Volt (z. B. 300 Volt oder 380 Volt)) vorgesehen, da die verwendeten Fahrzeugbatterien eine solche Bordnetzspannung zur Verfügung stellen. Die Heizleistung derartiger Hochvoltheizer liegt in der Größenordnung von 3 bis 6 kW (Kilowatt), gegenüber einer Größenordnung von 1 bis 1,7 kW (z. B. 1,2 kW) bei 12 Volt- Zuheizern für Kraftfahrzeuge. Dementsprechend enthält ein solcher HochvoltHeizer wesentlich mehr PTC-Heizelemente als eine konventionelle elektrische Zusatzheizung, vorzugsweise mehr als 40, weiter vorzugsweise zwischen 50 und 100, zum Beispiel ca. 60 PTC-Heizelemente gegenüber 10 bis 20 im konventionellen Kraftfahrzeug.

Damit ergibt sich das Problem, die größere Heizleistung an den zu erwärmenden Luftstrom zu übertragen. Hierfür sind prinzipiell zwei Lösungen möglich.

Zum ersten kann die Leistung durch Vergrößerung der von der strömenden Luft kontaktierten Heizeroberfläche erhöht werden. Der Prozess des Wärmeübergangs von der Heizeroberfläche auf den Luftstrom wird zusätzlich durch von der Heizeroberfläche ausgesendete Strahlungswärme unterstützt. Eine Vergrößerung der Heizeroberfläche stößt jedoch beim Einsatz in einem Kraftfahrzeug an ihre Grenzen, da die Größe des Bauraums beim Einbau in ein Heiz-/Klimagerät fest vorgegeben ist.

Zum zweiten kann die übertragene Leistung auch durch eine Erhöhung der Oberflächentemperatur der Heizung erhöht werden. Da hierbei ein größerer Temperaturgradient zwischen der Heizeroberfläche und der strömenden Luft auftritt, kann in der gleichen Zeit mehr Wärme übertragen werden als bei geringerer Oberflächentemperatur. Indem man die Oberflächentemperatur der Heizung gegenüber konventionellen Zuheizern erhöht, lässt sich eine Vergrößerung der Oberfläche vermeiden oder zumindest gering halten. Deshalb ist die zweite Möglichkeit der Erhöhung der Leistungsübertragung an die zu erwärmende Luft besonders für Hochvoltheizvorrichtungen für Fahrzeuge mit Elektroantrieb (Elektro- oder Hybridfahrzeuge) geeignet. Hierbei werden spezielle PTC-Heizelemente eingesetzt, die im Betrieb höhere Oberflächentemperaturen erreichen können als die in konventionellen PTC-Heizern eingesetzten Heizelemente. Eine Konsequenz ist jedoch, dass diese PTC-Heizelemente eine andere (hin zu höheren Temperaturen verschobene) Widerstands- beziehungsweise Leistungscharakteristik haben, und somit erst bei höheren Temperaturen automatisch abregeln.

Daraus ergibt sich jedoch ein zusätzliches Problem der Gewährleistung der Sicherheit bzw. des Schutzes der die Heizvorrichtung umgebenden Komponenten des Kraftfahrzeugs gegen Schäden durch Überhitzung.

Grundsätzlich ist es so, dass im Störungsfall, wenn die Luftzufuhr unterbrochen wird, insbesondere wenn das den Luftstrom erzeugende Gebläse ausfällt, sich die Oberflächentemperatur des PTC-Heizelementes auf die maximale PTC-Oberflächentemperatur erhöht. Dabei reduziert sich die elektrische Leistung auf einen Wert, der nur noch einem Bruchteil der maximal möglichen Leistung entspricht.

Eine entsprechende Störung kann ebenfalls auftreten, wenn bei Ansteuerung einer elektrischen Heizung die Luftzufuhr deutlich vermindert oder unterbrochen wird, ohne dass die zu erzeugende Wärmemenge (vorgegebene Leistung) entsprechend reduziert wird. Eine solche Situation kann bei Störung innerhalb einer automatischen Heizungssteuerung oder auch bei manueller Einstellung einer Heizung in Folge Fehlbedienung auftreten.

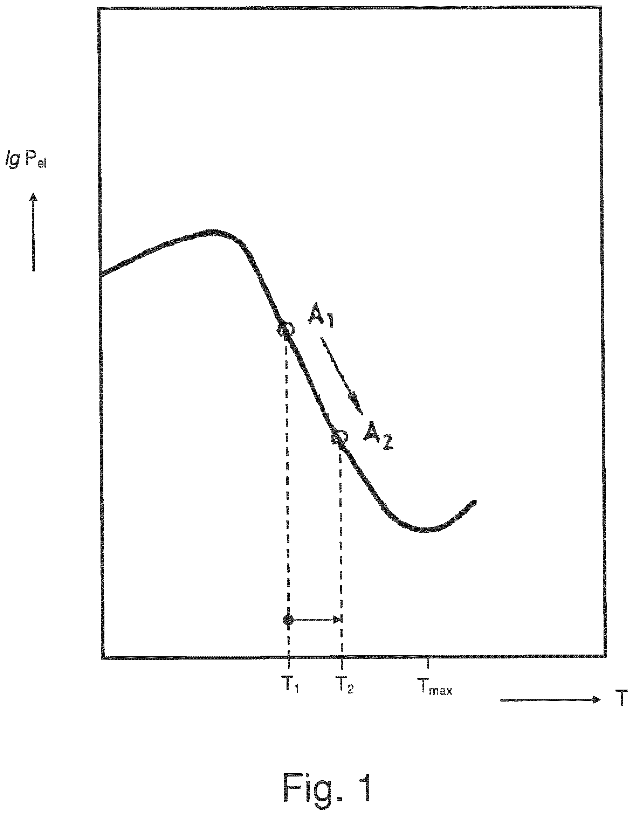

Die Temperaturabhängigkeit der von dem PTC-Element in Wärme umgesetzten elektrischen Leistung Pₑₗ ist in Fig. 1 über der Oberflächentemperatur des PTC-Elementes dargestellt. Bei einer gegebenen Betriebsspannung stellt sich im PTC-Element eine Stromaufnahme (Arbeitspunkt) in Abhängigkeit von der Umgebungstemperatur, d.h. der Temperatur des aufzuheizenden Mediums (Luft) und der Wärmeleitung vom PTC-Element zum aufzuheizenden Medium ein. Ein solcher Arbeitspunkt ist mit dem Arbeitspunkt A₁ bei der Temperatur T₁ in Fig. 1 dargestellt.

Heizt sich das PTC-Element aufgrund einer Störung im Luftstrom auf, so kann die im PTC-Element umgesetzte Wärmemenge nicht mehr abgeführt werden. Das PTC-Element nimmt dann eine höhere Temperatur ein. Sein Arbeitspunkt auf der Kennlinie verschiebt sich weiter nach unten, wie in Fig. 1 mit dem neuen Arbeitspunkt A₂ bei der Temperatur T₂ angegeben. Dabei reduziert sich die Stromaufnahme deutlich und das PTC-Heizelement kann die durch die Dotierung vorgegebene maximale Temperatur Tₘₐₓ erreichen.

In konventionellen elektrischen Luftheizvorrichtungen werden PTC-Elemente verwendet, bei denen die maximal im Betrieb erreichbaren Oberflächentemperaturen des PTC-Elementes selbst (Temperaturen, bei denen die PTC-Elemente aufgrund des hohen Widerstands selbsttätig abregeln) bei höchstens etwa 170°C liegen. In diesem Bereich tritt noch keine Beschädigung der Umgebung auf, da selbst bei Ausfall der Wärme abtransportierenden Luftströmung die Temperaturen im Umgebungsbereich der Heizvorrichtung noch gut von den dort verwendeten Materialien vertragen werden (z. B. den Kunststoffen, die im Heiz-/Klimagerät üblicherweise verwendet werden). Insbesondere gilt dies auch deshalb, weil die installierte Heizleistung, üblicherweise mit einer Größenordnung von 1000 Watt, deutlich kleiner ist als bei Hochvoltheizern.

Um eine Störung, insbesondere einen Ausfall des Gebläses, sicher erkennen zu können, ist es bei Verwendung von PTC-Heizelementen, die keine höheren Oberflächentemperaturen als etwa 170°C erreichen können, ausreichend, einen Leistungsschwellwert zu definieren, der einer minimalen, im Normalbetrieb auftretenden Heizerleistung entspricht. Wenn durch das selbsttätige Abregeln die Heizerleistung unter einen solchen Leistungsschwellwert sinkt, kann man sicher davon ausgehen, dass die PTC-Heizelemente automatisch abgeregelt haben und eine Lüfterstörung vorliegt. Eine solche Vorgehensweise ist in der europäischen Patentschrift EP 1 350 647 B1 beschrieben.

Wie bereits ausgeführt, ist es jedoch bei den Hochvolt-Heizern für Fahrzeuge mit Elektroantrieb vorteilhaft, PTC-Elemente zu verwenden, die erst bei deutlich höheren Temperaturen abregeln, dafür aber auch im Regelbetrieb höhere Oberflächentemperaturen gestatten. Die maximal mögliche Oberflächentemperatur der PTC-Heizelemente selbst liegt jetzt in einem Bereich von mindestens 180°C. Je nach Ausführungsform sind maximale Oberflächentemperaturen im Bereich von 200°C möglich. Solche Heizelemente ermöglichen auch eine höhere Betriebstemperatur der Wärme abstrahlenden Oberfläche der Heizvorrichtung, zum Beispiel Radiatoren, was sich wiederum, wie oben beschrieben, angesichts des im Kraftfahrzeug zur Verfügung stehendem beschränkten Einbauraums vorteilhaft auf die Wärmeleistung auswirkt.

Als Konsequenz aus den wesentlich größeren Heizleistungsanforderungen und damit verbundenen höheren maximal erreichbaren Oberflächentemperaturen der für Fahrzeuge mit Elektroantrieb verwendeten PTC-Elemente ist der oben beschriebene Selbstregelungsmechanismus als Überhitzungsschutz für die Fahrzeugsicherheit zwar grundsätzlich geeignet, aber nicht für Kunststoff-Bauteile in unmittelbarer Heizungsnähe, da Beschädigungen auch auftreten können, wenn diese PTC-Elemente selbsttätig abregeln.

Wesentlich dazu trägt neben der höheren PTC-Temperatur die 3-fache bis 5-fache Heizleistung, z.B. 4 kW gegenüber 1 kW, und die damit verbundene höhere Energiedichte, bei.

Wie erwähnt, werden die aufgrund der Charakteristik maximal möglichen Oberflächentemperaturen der PTC-Elemente dann erreicht, wenn der Luftstrom ausfällt (oder zumindest die Strömungsgeschwindigkeit deutlich absinkt - niedriger Luftvolumenstrom). Im Normalbetrieb sorgt dagegen die strömende Luft dafür, dass ausreichend Wärme abgeführt wird, und die Oberflächentemperatur der PTC-Heizelemente immer unterhalb des maximal möglichen Werts bleibt. Bei konventionellen Heizern mit einer maximalen PTC-Oberflächentemperatur von 170°C und einer Heizleistung von 1000 Watt liegt die maximale Temperatur in Heizungsnähe bei ausgeschaltetem Lüfter in einem Bereich von ca. 130°C. Bei Hochvoltheizern mit 3-5-facher Heizleistung und PTC-Elementen mit einer maximalen Oberflächentemperatur von 180°C oder darüber liegt sie um mindestens etwa 30 bis 60 Grad, z. B. 50 Grad, höher.

Das Heiz-/Klimagerät (HVAC - Heating-Ventilation-Air-Conditioning) ist üblicherweise nur für eine maximale Betriebstemperatur bis 130°C ausgelegt. Das HVAC besitzt jedoch selbst keinen eigenen Schutzmechanismus gegen Überhitzung. Wenn aber im Störungsfall die Oberflächentemperatur der Heizelemente 180°C oder mehr erreicht, so entstehen jedoch auch im Umgebungsbereich im HVAC schnell unzulässig hohe Temperaturen. Ein niedriger oder ausfallender Luftvolumenstrom führt deshalb zu einer unbedingt zu vermeidenden Überhitzung. Dies tritt insbesondere im Fall einer Gebläsestörung/eines Gebläseausfalls auf, kann aber auch dann der Fall sein, wenn - z.B. wegen Beschädigung oder auch Fehlbedienung - durch falsche Stellung der Luftführungsklappen die Luft am Strömen gehindert wird und es zu einem Luftstau kommt.

Bei einer Überhitzung drohen insbesondere folgende Gefahren:
Erstens, die Umgebung der Heizvorrichtung, insbesondere der Kunststoff des Heiz-/Klimagerätes kann beschädigt werden. Mögliche Schäden bei zu großer Temperaturbelastung sind insbesondere ein Verzug des Heizungsgehäuses bis hin zum Schmelzen des Kunststoffs, Luftleckage, Schädigung der Luftführungklappen und Geräusche. Ein Austausch ist aufwändig und verursacht hohe Kosten.

Zweitens, wenn nach einem Lüfterausfall der Lüfter wieder anspringt, so wird eine aufgrund des Hitzestaus innerhalb der Heizvorrichtung entstandene Luftwolke mit einer Temperatur von ca. 180°C weitergeleitet. Dies birgt eine erhebliche Gefahr der Beschädigung weiterer Bauteile, unangenehme Dämpfe/Gerüche überhitzter Kunststoffe und unzulässige Luftaustrittstemperaturen an den Ausströmern im Fahrgastraum.

Demzufolge ist ein zusätzlicher Sicherheitsmechanismus erforderlich, der das Heiz-/Klimagerät vor Beschädigungen und die Fahrzeuginsassen vor Verletzung durch zu heiße Luft schützt.

Auf das selbsttätige Abregeln der PTC-Heizelemente kann hierbei nicht zurückgegriffen werden, da wie beschrieben die maximal erreichbaren Temperaturen der verwendeten PTC-Heizelemente so hoch sind, dass bereits vor deren Erreichen Beschädigungen auftreten können. Es ist also ein externes Eingreifen erforderlich.

Es ist zwar durchaus bekannt, für verschiedene Zwecke der Steuerung/Regelung von Fahrzeugheizungen/Klimaanlagen Temperaturfühler im Luftstrom zu platzieren. Eine solche Anordnung ist zum Beispiel in der EP 1 516 761 A1 beschrieben. Hierbei ist ein Temperatursensor so angeordnet, dass er im Luftstrom der aufzuheizenden Luft liegt und die Temperatur der zuströmenden Luft erfasst und an die Steuerschaltung der Heizvorrichtung weitergibt.

Eine Heizvorrichtung mit einem Temperatursensor, der im Luftstrom angeordnet ist, ist in DE 199 18 906 A1 beschrieben. Hierbei ist der Temperatursensor im Endbereich eines Heizblocks, in einer Lücke zwischen dem Ende eines Radiatorelements und dem Rahmen eines PTC-Heizblocks angeordnet. Er soll die Luft-Eingangstemperatur am PTC-Heizregister bzw. die Luft-Austrittstemperatur am Heizwärmetauscher messen.

EP 2 249 618 A1 beschriebt eine Kraftfahrzeugheizung mit PTC-Heizelementen, bei der mehrere Heizelememnte zusammen mit Radiatoren zu einem Heizblock zusammengefasst sind. Dabei ist jedes einzelne der Heizelemente von einer röhrenförmigen Umhüllung aus einem wärmeleitenden Material umgeben. Das Heizelement selbst steht in Kontakt mit Elektroden. Zwischen den Elektroden und der röhrenförmigen Umhülling ist eine weitere, elektrisch isolierende, aber wärmeleitende Schicht, vorzugsweise aus einem flexiblen Kunstoffmaterial, vorgesehen. An den jeweiligen Schmalseiten der röhrenförmigen Umhüllung sind zur Verbesserung der Stabilität der Gesamtanordnung Einbuchtungen vorgesehen. Hier kann insbesondere auch ein Temperatursensor angebracht werden.

Im vorliegenden Fall geht jedoch die Gefahr für das Heiz-/Klimagerät nicht nur von der (erwärmten) Luft aus, sondern insbesondere von der Strahlungswärme der PTC-Heizelemente/Heizeroberfläche. Eine Messung einer Temperatur des Luftstroms durch die Verwendung eines Temperaturfühlers im Luftstrom ist deshalb im vorliegenden Fall zumindest für die Abwehr der von Schäden an Umgebungskomponenten nicht geeignet. Die gemessene Temperatur wird bei Messung im Luftstrom stark durch äußere Faktoren, wie Lufttemperatur und Strömungsgeschwindigkeit, beeinflusst, so dass sie keine eindeutigen Rückschlüsse auf die PTC-Oberflächentemperatur zulässt.

Um eine drohende Überhitzung möglichst präzise und unverzüglich erkennen und entsprechend eingreifen zu können, ist es wünschenswert, die Temperatur möglichst nahe an der Wärmequelle zu erfassen.

Andererseits scheidet eine direkte Messung der Temperatur an der Oberfläche der PTC-Heizelemente aus konstruktiven Gründen aus.

Es ist Aufgabe der vorliegenden Erfindung, eine verbesserte, insbesondere für den Einsatz in Fahrzeugen mit Elektroantrieb geeignete elektrische Heizvorrichtung für ein Kraftfahrzeug, bei der Gefahren durch Überhitzung sicher und unverzüglich erkannt und vermieden werden können und die eine einfach herstellbare Konstruktion aufweist, bereitzustellen.

Diese Aufgabe wird mit den Merkmalen des unabhängigen Patentanspruchs 1 gelöst.

Es ist der besondere Ansatz der vorliegenden Erfindung, eine Temperatur einer elektrischen Heizvorrichtung mit einem Temperatursensor zu erfassen, der über ein Wärmeleitelement mit dem unmittelbaren Bereich der Wärmequelle (dem Heizblock) verbunden ist, und die Wärme dem Temperatursensor zuführt. Die Verwendung des Wärmeleitelements ermöglicht es einerseits, den Temperatursensor außerhalb des Heizblocks und geschützt vor äußeren Einflüssen, insbesondere vom Luftstrom, anzuordnen. Andererseits führt sie zu einer guten Korrelation zwischen einer von dem Temperatursensor unmittelbar erfassten Temperatur und einer Oberflächentemperatur der Heizvorrichtung, wodurch die Temperatur der Oberfläche der Heizelemente indirekt gemessen werden kann. Folglich kann Aufschluss darüber bekommen werden, mit welcher Intensität eine Wärmestrahlung stattfindet. Dadurch kann eine unzulässige Erwärmung rechtzeitig erkannt werden, und die Heizleistung entsprechend reduziert werden.

Indirekte Bestimmung der Oberflächentemperatur des Heizelementes bedeutet, dass die von dem Sensor erfasste Temperatur in guter Näherung ein eindeutiger Indikator für die Oberflächentemperatur des Heizelementes ist.

Vorzugsweise sind die PTC-Heizelemente so ausgelegt, dass sie eine maximale Oberflächentemperatur von 180°C oder mehr erreichen können. Wie bereits ausgeführt, müssen PTC-Heizelemente verwendet werden, die solche Oberflächentemperaturen erreichen können, um trotz begrenztem Einbauraum die bei Fahrzeugen mit Elektroantrieb erforderlichen hohen Heizleistungen an die Luft übertragen zu können. Andererseits ist bei Verwendung derartiger PTC-Heizelemente der Selbstregelungseffekt nicht geeignet, eine unzulässige Erwärmung (Überhitzung) zuverlässig zu verhindern, da das selbsttätige Abregeln erst in einem Temperaturbereich auftritt, der für die Vermeidung von Schäden bereits zu hoch ist. Deshalb ist die erfindungsgemäße Lösung bei Einsatz derartiger PTC-Heizelemente besonders vorteilhaft. Ebenfalls vorzugsweise sind die PTC-Heizelemente für eine Betriebsspannung im automobiltechnischen Hochvoltbereich ausgelegt. Eine derartige Auslegung der Heizelemente entspricht dem vorzugsweise vorgesehenen Einsatz in Fahrzeugen mit Elektroantrieb.

Vorzugsweise ist der Temperatursensor außerhalb des Luftstroms angeordnet. Dadurch wird vermieden, dass die durch die bekannten Eigenschaften des Wärmeleitelements gute Korrelation zwischen der erfassten Temperatur und der Oberflächentemperatur des Heizelements durch den Einfluss des Luftstroms gestört beziehungsweise verfälscht wird.

Dass die Temperaturerfassung nicht im Luftstrom erfolgt, also keine Temperatur des Luftstroms gemessen wird, ist vorteilhaft, da die Luftstromtemperatur nämlich neben der Heizertemperatur auch von einer Vielzahl weiterer Parameter, insbesondere der Ausgangstemperatur der zu erwärmenden Luft und der Strömungsgeschwindigkeit ab. Der Temperatursensor gemäß der Erfindung erfasst eine Temperatur, die durch Wärmeleitung gut mit einer PTC-Oberflächentemperatur korreliert ist. Er ermöglicht damit die indirekte Bestimmung der PTC-Oberflächentemperatur.

Eine Anordnung außerhalb des Luftstroms kann z.B. dadurch realisiert werden, dass der Temperatursensor außerhalb eines durch den Rahmen gebildeten Aufnahmeraums für den Heizblock angeordnet ist. Der Rahmen als Begrenzung des Aufnahmeraums stellt gleichzeitig eine Begrenzung des von dem Luftstrom durchströmbaren Bereichs dar.

Gemäß einer bevorzugten Ausführungsform kontaktiert das Wärmeleitelement das Radiatorelement. Dieses kann insbesondere in Form einer Heizrippe (Wellrippe) ausgeführt sein. Weiterhin können eine Mehrzahl von Heizrippen (Heizrippenlagen) in einem schichtartigen Aufbau zwischen einer Mehrzahl von Heizelementen angeordnet sein, wobei mindestens eine der Heizrippenlagen von dem Wärmeleitelement kontaktiert wird.

Gemäß einer weiteren bevorzugten Ausführungsform kontaktiert das Wärmeleitelement direkt das PTC-Heizelement. Hierdurch kann eine besonders gute Korrelation der von dem Temperatursensor gemessenen Temperatur mit der Oberflächentemperatur des Heizelements erreicht werden, da der Kontakt des Wärme leitenden Elementes direkt an der Wärmequelle erfolgt.

Vorzugsweise bildet das Gehäuse der Heizvorrichtung neben dem Rahmen für den Heizblock ein Steuergehäuse aus, in dem die Steuereinrichtung angeordnet ist. Dabei bilden Rahmen und Steuergehäuse weiter vorzugsweise eine bauliche Einheit. Diese kann zum Beispiel dadurch realisiert sein, dass das Steuergehäuse auf den den Heizblock tragenden Rahmen aufgesteckt wird. Durch eine solche Gestaltung wird einerseits eine besonders kompakte Bauweise realisiert und andererseits wird die Steuereinrichtung vor dem Luftstrom sowie vor äußeren Einflüssen, etwa durch Tauwasser vom Verdampfer der Klimaanlage, geschützt.

Vorzugsweise bildet das Gehäuse zwischen dem Heizblock und der Steuereinrichtung eine Trennwand aus, die eine Aufnahmeeinrichtung aufweist, in der der Temperatursensor Wärme leitend eingebettet. Die Trennwand besteht vorzugsweise aus Kunststoff. Weiter vorzugsweise besteht das gesamte Gehäuse aus Kunststoff, vorzugsweise aus besonders hitzebeständigem Kunststoff. Aus Kostengründen wird aber für von der eigentlichen Heizvorrichtung weiter entfernte Komponenten des Heiz-/Klimagerätes auf solche speziellen Kunststoffe verzichtet. Ebenfalls vorzugsweise ist die Aufnahmeeinrichtung durch einen topfförmigen Zapfen gebildet, der von einem Anschlussende des Wärmeleitelements formschlüssig umgriffen ist. Zum Beispiel kann das Wärmeleitelement an dem der Wärmequelle gegenüber liegenden Ende eine angeformte Hülse aufweisen, die wiederum den Zapfen formschlüssig umschließt. Insbesondere ist weiter vorzugsweise das Wärmeleitelement ein an dem PTC-Heizelement oder dem Radiatorelement anliegendes Wärmeleitblech, das an seinem Anschlussende eine Kontakthülse ausformt, die die auf den Zapfen aufgesteckt ist. Der Temperatursensor kann in die Aufnahmeeinrichtung (insbesondere: einen Hohlraum im Inneren des Zapfens) mittels einer Vergussmasse oder Wärmeleitpaste eingebettet sein.

Gemäß einer bevorzugten Ausführungsform umfasst der Heizblock als Radiatorelemente mehrere parallele Heizrippenlagen, zwischen denen das wenigstens eine PTC-Heizelement aufgenommen ist. Das Wärmeleitelement ist dabei als durchgehende Lage des Heizblocks ausgebildet, d.h. es hat die gleiche Länge wie die Heizrippenlagen bzw. das PTC-Heizelement.

Vorzugsweise umfasst die elektrische Heizvorrichtung ein Gebläse zur Erzeugung des Luftstroms. Alternativ ist eine Erzeugung des Luftstroms außerhalb des Bereichs der elektrischen Heizvorrichtung möglich.

Vorzugsweise umfasst die erfindungsgemäße Heizvorrichtung mehr als 40, weiter vorzugsweise zwischen 50 und 100, zum Beispiel 60 oder ca. 60 PTC-Heizelemente.

Gemäß einer bevorzugten Ausführungsform ist die Steuereinrichtung ausgebildet, die Heizleistung in Abhängigkeit von einer von dem Temperatursensor erfassten Temperatur zu reduzieren.

Weiter vorzugsweise schließt die Steuereinrichtung eine Überwachungseinrichtung ein, zum Überwachen, ob die von dem Temperatursensor erfasste Temperatur einen vorbestimmten Temperaturwert überschreitet. Die Steuereinrichtung ist weiterhin ausgebildet, die Heizleistung zu reduzieren, wenn die Überwachungseinrichtung feststellt, dass die von dem Temperatursensor erfasste Temperatur den vorbestimmten Temperaturwert überschreitet.

Vorzugsweise wird der vorbestimmte Temperaturwert (Schwellenwert) so gewählt, dass sein Überschreiten ein Indiz dafür ist, dass die Erzeugung des Luftstroms gestört ist, und eine sichere und kontinuierliche Wärmeabführung nicht mehr gewährleistet werden kann. Um Schäden durch Überhitzung zu vermeiden, muss einem drohenden Wärmestau durch entsprechende Maßnahmen entgegengewirkt werden.

Da im Fehlerfall (Lüfterausfall) mit dem Wegfall des Luftstroms automatisch auch der Kühlungseffekt wegfällt, erreichen sowohl die Oberflächentemperaturen der Heizelemente als auch die Temperaturen weiter entfernter Oberflächen durch Wärmeabstrahlung unzulässig hohe Werte, wodurch sich das Gefahrenpotential ergibt, das durch die vorliegende Erfindung eliminiert werden soll. Beim Lüfterausfall wird an den Wärmeleitelementen (Wärmeübertragern) innerhalb von etwa zwei Minuten nahezu die durch die Dotierung vorbestimmte PTC Temperatur erreicht. Ein PTC mit einer Oberflächentemperatur von beispielsweise 200°C erwärmt dabei die sehr gut wärmeleitende metallische Oberfläche auf ca. 195°C. Nach vier bis sechs Minuten wird dabei in unmittelbarer Heizungsumgebung die kritische Temperatur von 130°C überschritten.

Ein wirkungsvoller Schutz vor Überhitzung ist gewährleistet wenn eine Abschaltung oder Reduzierung der Heizleistung bei einer am Wärmeübertrager anliegenden (von dem Temperatursensor erfassten) Temperatur etwa 30 Grad unter der erreichbaren PTC-Temperatur (im Beispiel also 200°C - 30°C = 170°C) geschieht. Weiter vorzugsweise erfolgt die Abschaltung oder Reduzierung erst dann, wenn diese Temperatur über einen Zeitraum von mehr als zwei bis drei Minuten anhält. Eine sinnvolle Temperaturschwelle (vorbestimmter Temperaturwert) könnte also etwa bei 170°C liegen, zum Beispiel ein Wert aus dem Intervall von etwa 150°C oder 160°C bis 175 °C sein

Gemäß einer bevorzugten Ausführungsform erfolgt die Reduzierung der Heizleistung auf Null, wenn die gemessene Temperatur den Schwellenwert überschreitet. In diesem Fall wird also die Heizleistung ganz abgeschaltet, und an der abgeschalteten Heizung können Maßnahmen zur Störungsfeststellung bzw. -beseitigung ergriffen werden.

Alternativ vorzugsweise wird die Heizleistung im Falle festgestellter Überhitzung entweder stufenweise oder kontinuierlich (zum Beispiel linear) reduziert.

Gemäß einer bevorzugten Ausführungsform reduziert die Steuereinrichtung die Heizleistung erst dann, wenn die von der Überwachungseinrichtung festgestellte Überschreitung des vorbestimmten Temperaturwertes länger als eine vorbestimmte Zeitdauer andauert. Damit sollen kurzfristige Schwankungen, die keine Schädigung hervorrufen können, unberücksichtigt bleiben.

Die Heizungsabschaltung bzw. Leistungsabregelung soll eigenständig die Heizung auf die maximal zulässige Temperatur regeln, aber keine dauerhafte Abschaltung bewirken. Deshalb wird weiter vorzugsweise von der Überwachungseinrichtung nach dem Reduzieren der Heizleistung überwacht, ob die von dem Temperatursensor erfasste Temperatur einen zweiten vorbestimmten Temperaturwert unterschreitet, wobei der zweite vorbestimmte Temperaturwert niedriger ist als der vorbestimmte Temperaturwert, dessen Überschreiten zum Reduzieren der Heizleistung führt. Ist die Temperatur am Wärmeübertrager mindestens 50 Grad unter der erreichbaren PTC-Oberflächentemperatur von beispielsweise 200°C, kann von einer funktionierenden Wärmeableitung ausgegangen werden. Ein geeigneter zweiter vorbestimmter Temperaturwert könnte also bei etwa 150°C liegen, zum Beispiel ein Wert aus dem Intervall von 130°C oder 140°C bis 155°C sein. Die Steuereinrichtung ist weiter vorzugsweise so ausgebildet, dass sie die Heizleistung wieder erhöht, wenn die Überwachungseinrichtung feststellt, dass die von dem Temperatursensor erfasste Temperatur den zweiten vorbestimmten Temperaturwert unterschreitet. Bei Erreichen einer zweiten, unteren Schwellentemperatur wird also die Heizleistung wieder aufgeschaltet. Auch das Wiederaufschalten der Heizleistung auf Basis der zweiten Schwellentemperatur kann mit einer Timerfunktion verknüpft werden, so dass das Aufschalten erst dann erfolgt, wenn die zweite Schwellentemperatur während einer vorbestimmten Zeitdauer unterschritten wird, um kurzzeitige Schwankungen unberücksichtigt zu lassen.

Gemäß einer weiteren bevorzugten Ausführungsform umfasst der Heizblock mehrere separat ansteuerbare Heizstufen (auch als Heizkreise bezeichnet), deren jede wenigstens ein PTC-Heizelement umfasst. Hierbei ist für jede Heizstufe separat eine entsprechendes erfindungsgemäßes Wärmeleitelement und ein erfindungsgemäßer Temperatursensor vorgesehen. Bei Erreichen des vorbestimmten Maximalwertes kann eine Temperaturbegrenzung alternativ entweder in Form einer Leistungsreduzierung/-abschaltung des betroffenen Heizkreises, oder aber der kompletten Heizvorrichtung erfolgen.

Weiterhin kann die Steuerung derart erfolgen, dass zunächst nur die Leistung des betroffenen Heizkreises, dessen zugeordneter Temperatursensor die unzulässig hohe Temperatur erfasst hat, reduziert wird. Wenn die Temperatur daraufhin nicht innerhalb einer vorbestimmten Zeit wieder auf zulässige Werte sinkt, so wird anschließend auch die Heizleistung benachbarter bzw. aller Heizkreise reduziert. Zum Beispiel kann nach einer ersten vorbestimmten Zeit eine Leistungsreduzierung benachbarter, und nach einer anschließenden zweiten vorbestimmten Zeit die Leistungsreduzierung aller Heizkreise vorgenommen werden, bis hin zur Komplettabschaltung der Heizung.

Eine solche Ausführungsform bietet den bestmöglichen Schutz, da die Einbausituation und Temperaturschichtungen innerhalb des HVAC besser berücksichtigt werden können. Die erfindungsgemäße Lösung ist in diesem Hinblick auch deshalb besonders vorteilhaft, da es die räumliche Trennung zwischen dem Abgriff der Temperatur an der Heizer-/Radiatoroberfläche und dem Temperatursensor ermöglicht, die jeweiligen Temperaturen der Heizkreise separat zu erfassen und zu verarbeiten.

Alternativ kann bei einer Heizungsauslegung mit nur zwei Heizkreisen auch ein mittig angeordnetes Wärmeleitelement mit einem einzigen Temperatursensor als gewählt werden. Bei mehr als zwei Heizstufen kann entsprechend für jeweils zwei Heizstufen ein mittig angeordneter gemeinsamer Temperatursensor vorgesehen sein.

Ebenfalls vorzugsweise ist die Überwachungseinrichtung so ausgebildet, dass sie eine Störung in der Erzeugung des Luftstroms signalisiert, wenn die Überwachungseinrichtung feststellt, dass die von dem Temperatursensor gemessene Temperatur den Schwellenwert überschreitet. Hierbei kann die Signalisierung beispielsweise durch ein akustisches oder ein optisches Signal erfolgen.

Gemäß einem weiteren bevorzugten Aspekt der vorliegenden Erfindung wird eine Kraftfahrzeuginnenraumheizung mit einer elektrischen Heizvorrichtung gemäß dem ersten Aspekt der vorliegenden Erfindung bereitgestellt.

Eine erfindungsgemäße Heizung ist jedoch alternativ auch für andere Aufgaben im Kraftfahrzeug, zur Bereitstellung erforderlicher Prozesswärme zum Vorwärmen oder Warmhalten betriebswichtiger Teile, wie zum Beispiel Batterie, einsetzbar.

Weitere vorteilhafte Ausgestaltungen sind Gegenstand der Unteransprüche.

Im Folgenden wird die vorliegende Erfindung anhand bevorzugter Ausführungsformen im Zusammenhang mit den beiliegenden Zeichnungen erläutert, in denen:
- Fig. 1: ein Diagramm der in einem PTC-Heizelement umgesetzten elektrischen Leistung in Abhängigkeit von der Temperatur zeigt;
- Fig. 2: Widerstands-Temperatur-Kennlinien von PTC-Elementen mit unterschiedlichen maximal erreichbaren Oberflächentemperaturen im Vergleich zeigt;
- Fig. 3: ein Beispiel für den Einsatz einer erfindungsgemäßen elektrischen Heizung zeigt;
- Fig. 4: den Aufbau einer Heizvorrichtung gemäß einer Ausführungsform der vorliegenden Erfindung mit einer Schnittdarstellung der Aufnahmeeinrichtung für den Temperatursensor zeigt;
- Fig. 5: den Aufbau einer Heizvorrichtung gemäß einer Ausführungsform der vorliegenden Erfindung mit einer Darstellung des formschlüssigen Anschlusses des Wärmeleitelements an die Aufnahmeeinrichtung für den Temperatursensor zeigt;
- Fig. 6: eine Detaildarstellung einer erfindungsgemäßen elektrischen Heizung gemäß der Ausführungsform von Fig. 5 zeigt;
- Fig. 7: eine Detaildarstellung eines Schnitts der Aufnahmeeinrichtung für den Temperatursensor zeigt;
- Fig. 8: eine Detaildarstellung einer weiteren Ausführungsform der vorliegenden Erfindung zeigt, bei der das Wärmeleitelement ein PTC-Heizelement direkt kontaktiert;
- Fig. 9: eine schematische Darstellung des geschichteten Aufbaus der in den Heizvorrichtungen gemäß Fig. 4 bis 8 angeordneten Heizelemente und Radiatorelemente darstellt; und
- Fig. 10: ein Ablaufdiagramm für ein Verfahren gemäß der vorliegenden Erfindung darstellt.

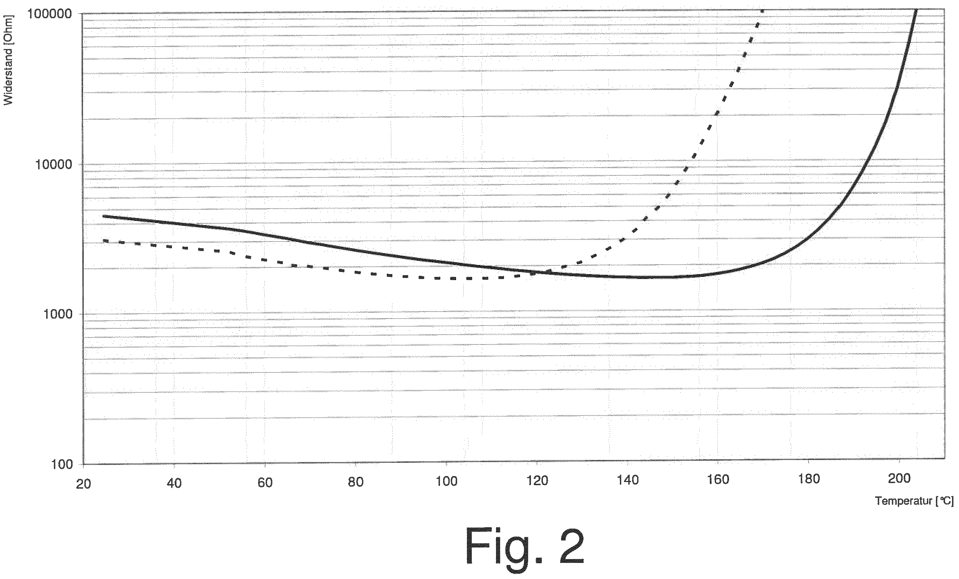

Fig. 2 stellt die Widerstands-Temperatur-Charakteristik zweier verschiedener PTC-Heizelemente im Vergleich dar. Die beiden PTC-Heizelemente unterscheiden sich durch ihre im Betrieb maximal erreichbaren Oberflächentemperaturen. Während bei dem der gestrichelten Kurve entsprechenden Heizelement die maximal erreichbare Temperatur ca. 170°C beträgt, liegt diese bei dem der durchgezogenen Kurve entsprechenden Heizelement bei ca. 205°C.

Qualitativ gesehen weisen beide Kurven einen ähnlichen Verlauf auf. Bis zu einer bestimmten (von Element zu Element verschiedenen) Temperatur ist der Verlauf der Widerstands-Temperaturkurven relativ flach. Dieser Bereich entspricht dem flach ansteigenden Bereich am linken Rand der in Fig. 1 gezeigten Kurve. Wenn die Temperatur jedoch den für das jeweilige PTC-Element individuell gültigen bestimmten Wert übersteigt, steigt der Widerstand stark an (man beachte die logarithmische Widerstandsskala in Fig. 2). Diese Temperatur wird Curie-Temperatur oder Bezugstemperatur genannt und entspricht dem Maximum auf der (ebenfalls logarithmischen) Leistungs-Temperatur-Kurve der Fig. 1. Sie liegt bei dem Heizelement mit der gestrichelten Kurve bei ca. 100°C und bei dem Heizelement mit der durchgezogenen Kurve bei ca. 150°C. Wie im Zusammenhang mit Fig. 1 erläutert, wird das PTC-Heizelement im Regelbetrieb in dem ansteigenden Abschnitt, bei einer Arbeitstemperatur betrieben, die etwas höher ist als die Bezugstemperatur. Die maximale Temperatur (oberes Ende der jeweiligen Kurve) wird im Regelbetrieb nicht erreicht, da durch den Luftstrom ständig Wärme abgeführt wird.

Im Störungsfalle jedoch, bei Ausfall des Luftstroms, versagt die Wärmeabfuhr, und der Arbeitspunkt verschiebt sich auf der Kennlinie der Fig. 2 nach oben. Bei in konventionellen Heizern verwendeten PTC-Elementen (gestrichelte Kurve) liegt die maximal erreichbare Temperatur in einem Bereich, in dem noch kein Schaden in der Umgebung auftritt. Deshalb reicht der Selbstregelungseffekt der PTC-Heizelemente bei konventionellen Heizern aus, um Schäden zu verhindern.

Im Falle von Hochvolt-Heizern werden jedoch PTC-Elemente verwendet (durchgezogene Kurve), deren maximal erreichbare Temperatur in einem Bereich liegt, in dem bereits Beschädigungen in der Umgebung auftreten können.

In diesem Fall kann man sich deshalb nicht auf den Selbstregelungseffekt des PTC-Heizelementes verlassen. Bereits Temperaturen unterhalb der maximal erreichbaren Temperatur des PTC-Elements stellen in diesem Falle eine Überhitzung dar. Eine solche Überhitzung muss sicher erkannt werden und eine weitere Erwärmung muss vermieden werden, bzw. ein Absinken der Temperatur in zulässige Bereiche eingeleitet werden.

Ziel der vorliegenden Erfindung ist es deshalb, eine Heizvorrichtung bereitzustellen, bei der unzulässig hohe Oberflächentemperaturen, wie sie beispielsweise beim Lüfterausfall oder falscher Klappenstellung auftreten, zuverlässig erkannt werden können, obwohl diese unzulässig hohen Temperaturen niedriger sind, als die maximal erreichbare Oberflächentemperatur des verwendeten PTC-Elements.

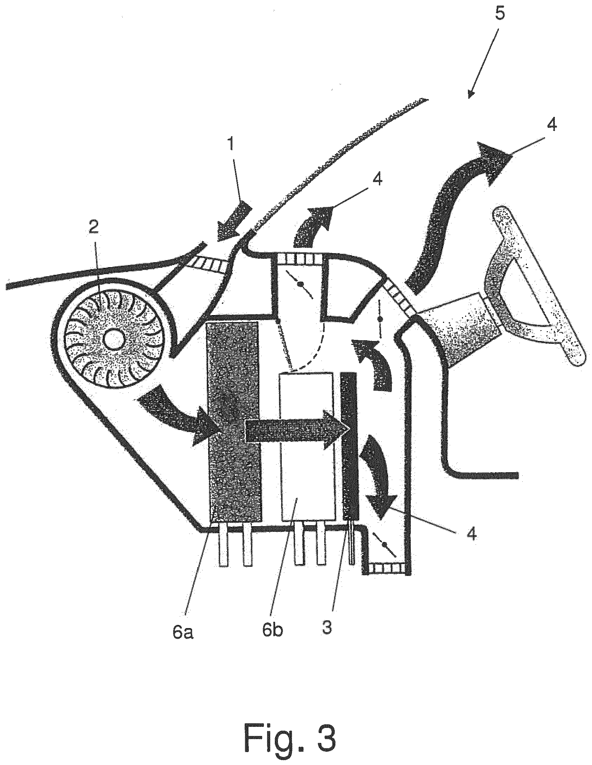

Fig. 3 zeigt den grundsätzlichen Aufbau bei der Verwendung eines erfindungsgemäßen Heizsystems zur Innenraumbeheizung eines Kraftfahrzeugs. Dabei ist das Heizsystem in eine Kfz-Klimaanlage (Heiz-/Klimagerät - HVAC) integriert. Von einem Gebläse 2 wird Außenluft 1 angesaugt, und an der Heizung 3 entlang geführt. Anschließend wird die erwärmte Luft 4 dem beabsichtigten Einsatzzweck zugeführt, indem sie in den Innenraum 5 geblasen wird. Dabei kann die Luft bei Integration in eine Klimaanlage zuvor über einen Verdampfer 6A und eine weitere Fahrzeugheizung 6B geleitet werden, bevor sie über die elektrische Heizvorrichtung 3 strömt.

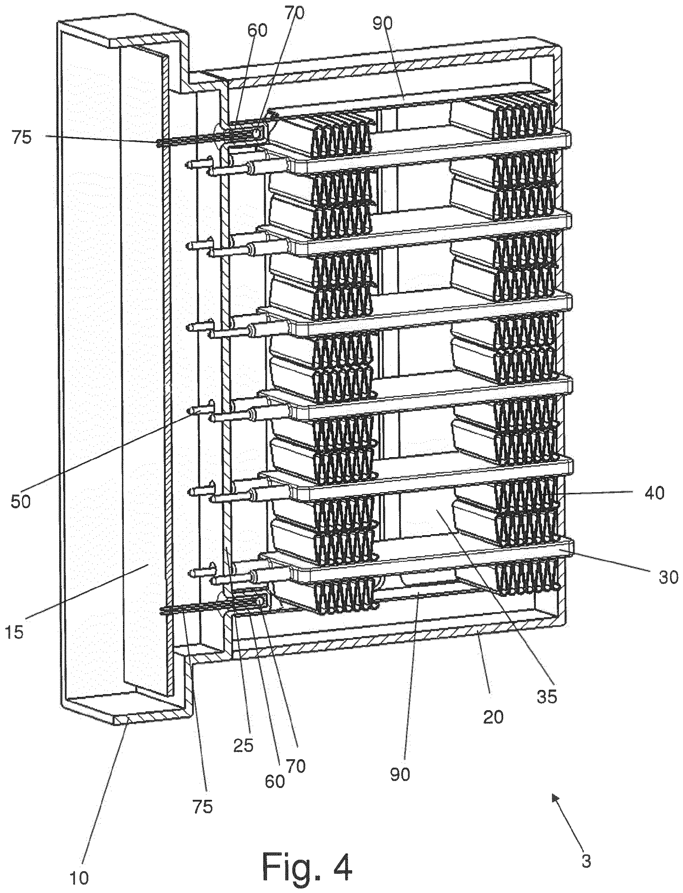

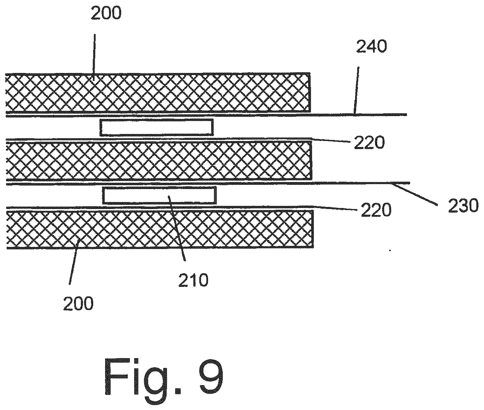

Der grundlegende mechanische Aufbau einer Heizvorrichtung 3 gemäß einer Ausführungsform der vorliegenden Erfindung ist in Fig. 4 dargestellt. Fig. 4 zeigt auf der linken Seite im Schnitt einen Teil des Steuergehäuses 10 zur Aufnahme der Komponenten der Elektronik für die Heizungssteuerung. Die Steuereinrichtung 15 wird hierbei vorzugsweise in Form einer bestückten Platine realisiert (im Bild nicht im Detail dargestellt). Die rechte Seite zeigt eine Schnittdarstellung des Heizblocks, bei dem in einem geschichteten Aufbau in einem Rahmen 20 die PTC-Heizelemente 30 eingebaut sind. Zur Abgabe der Wärme an die durchströmende Luft dienen Radiatorelemente 40, die in dem geschichteten Aufbau innerhalb der Rahmenkonstruktion jeweils zwischen den Heizelementen 30 angebracht sind. Gemäß einer im Bild dargestellten bevorzugten Ausführungsform sind die Radiatorelemente 40 in Form von Heizrippen (Wellrippen) ausgebildet. Die Wellrippen bilden eine große Oberfläche für die durchströmende Luft und bestehen z.B. aus Aluminium. Die Details des geschichteten Aufbaus werden weiter unten unter Bezug auf Fig. 9 erläutert.

Wie der Zeichnung weiter zu entnehmen ist, bildet das Steuergehäuse 10 mit dem Rahmen 20 eine bauliche Einheit. Der Aufnahmebereich 35 für den Heizblock, der im Betrieb von dem Luftstrom 4 durchströmt wird, ist von dem Innern des Steuergehäuses durch die Trennwand 25 getrennt. Diese dient damit auch der Abdichtung der Steuervorrichtung 15 von dem Luftstrom 4. In dem dargestellten Ausführungsbeispiel ist die Trennwand 25 Bestandteil des Steuergehäuses 10. Aus dem Aufnahmebereich 35 werden Anschlüsse 50 zur Stromversorgung der PTC-Heizelemente 30 heraus- und durch die Trennwand 25 in das Steuergehäuse 10 hineingeführt.

Der erfindungsgemäße Temperatursensor 70 ist in einer Aufnahmeeinrichtung in Form eines am Steuergehäuse 10 (in der Trennwand 25) ausgebildeten topfförmigen Zapfens 60 eingebettet. Der Zapfen 60 ist hohl ausgeführt und verfügt über eine Öffnung in das Innere des Steuergehäuses 10, durch die die elektrischen Anschlüsse 75 des Temperatursensors 70 an die Steuereinrichtung 15 geführt werden.

Das Wärmeleitelement 90 kontaktiert einerseits ein Radiatorelement 40 und besitzt andererseits eine angeformte Hülse, die den Zapfen 60 formschlüssig umgreift. Das Wärmeleitelement 90 dient als Wärmeübertrager und besteht aus gut Wärme leitendem Material (zum Beispiel Aluminium, Kupfer oder eine geeignete Legierung). Es ist als durchgehende Lage des Heizblocks ausgebildet.

In der in Fig. 4 dargestellten Ausführungsform sind jeweils zwei Wärmeleitelemente 90 und zwei Temperatursensoren 70, entsprechend zwei Heizstufen (Heizkreisen) gezeigt, wobei die Wärmeleitelemente 90 jeweils am untersten bzw. am obersten dargestellten Radiatorelement 40 anliegen.

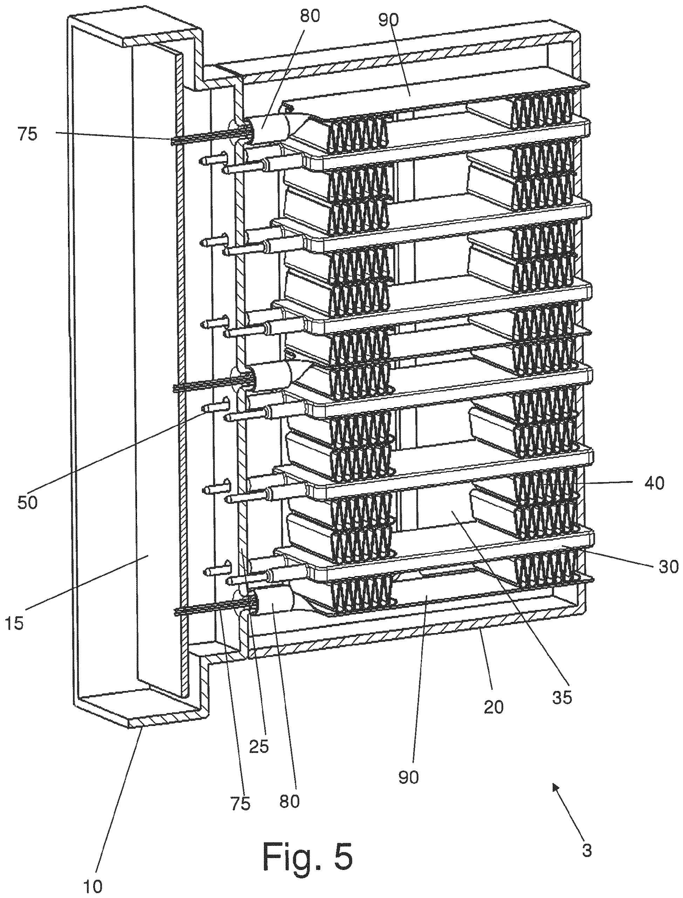

Eine ähnliche Schnittdarstellung des Aufbaus einer erfindungsgemäßen Heizvorrichtung 3 ist in Fig. 5 gezeigt, wobei gleiche Bezugszeichen gleiche Elemente bedeuten und deren Beschreibung deshalb hier nicht wiederholt wird.

Im Unterschied zu der Ausführungsform aus Fig. 4 sind in Fig. 5 drei Wärmeleitelemente 90, entsprechend drei Heizstufen bzw. Heizkreisen dargestellt.

Weiterhin unterscheidet sich die Darstellung der Fig. 5 von derjenigen aus Fig. 4 dadurch, dass die Aufnahmeeinrichtung (Zapfen) für den Temperatursensor nicht im Schnitt sondern als Außenansicht dargestellt ist. Es ist dementsprechend in der Zeichnung nur die an dem Wärmeleitelement 90 auf der der Wärmequelle gegenüber liegenden Seite ausgeformte Kontakthülse 80 zu sehen, die den Zapfen 60 von außen umschließt. Vorzugsweise ist die Heizvorrichtung 3 so ausgeführt, dass das Steuergehäuse 10 mit der Steuereinrichtung 15 einfach auf den Rahmen 20 mit dem Heizblock aufgesteckt werden kann. Während hierbei die Stromanschlüsse 50 für die Heizelemente durch entsprechende Bohrungen in das Steuergehäuse eingeführt werden, findet beim Aufstecken der Steuervorrichtung an das Heizungsteil 20 der formschlüssige Kontakt zwischen der Hülse 80 des Wärmeleitelements 90 und dem Zapfen am Steuergehäuse 10 statt.

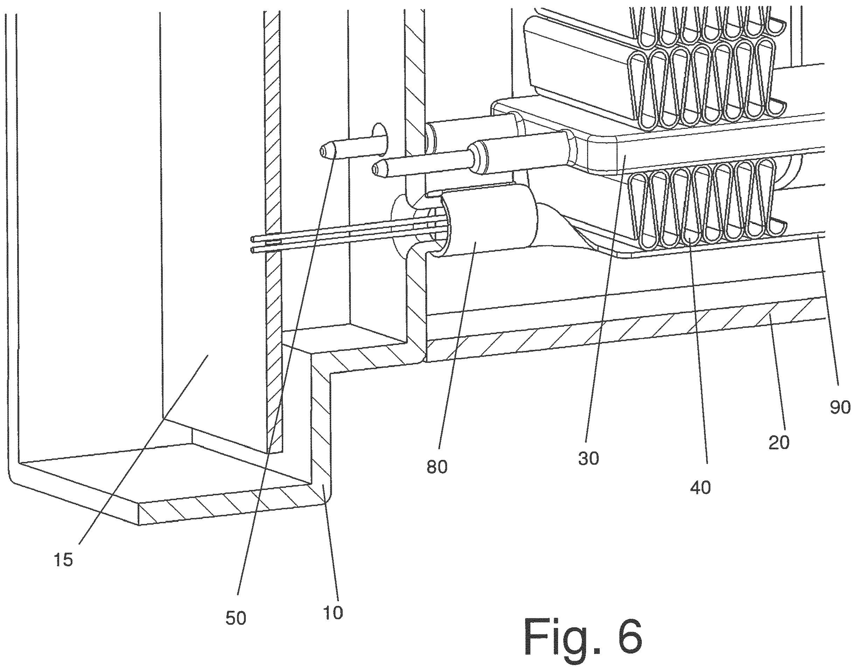

Eine noch detaillierte Darstellung eines Ausschnitts aus Fig. 5 ist in der folgenden Fig. 6 dargestellt. Hierbei ist besonders deutlich zu sehen, wie das Wärmeübertragungselement 90 einerseits eine Wellrippe 40 des Radiators kontaktiert, und andererseits über die Hülse 80 den als Aufnahmeeinrichtung für den Temperatursensor an das Steuergehäuse 10 angeformten Zapfen umschließt.

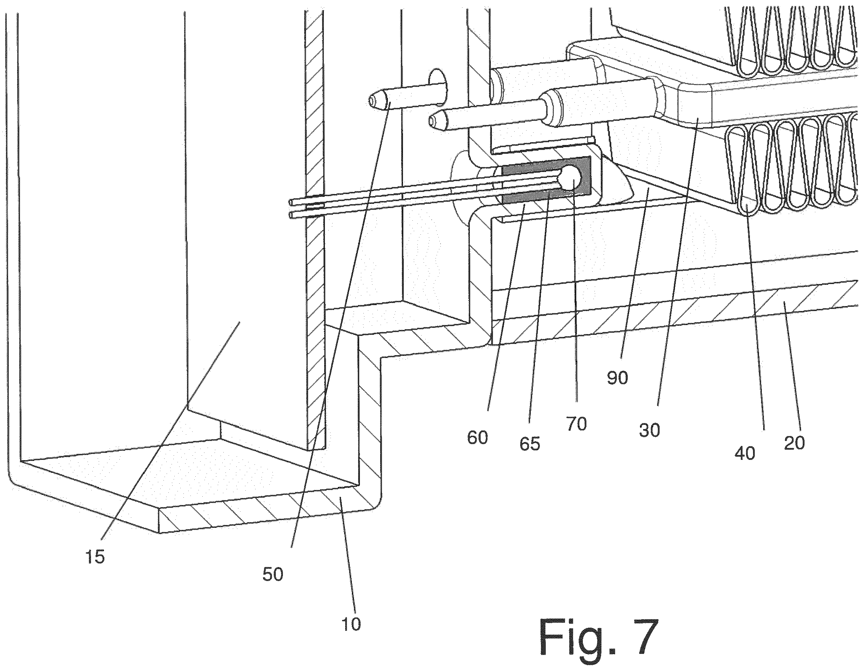

Fig. 7 ist eine Schnittdarstellung eines Details der erfindungsgemäßen Heizvorrichtung aus Fig. 5. Hierbei sieht man insbesondere die Aufnahmeeinrichtung für den Temperatursensor 70 in Form des in der Trennwand 25 zwischen Steuergehäuse 10 und Aufnahmeraum 35 für den Heizblock ausgebildeten Zapfens 60. Vorzugsweise erfolgt eine Wärme leitende Einbettung des Temperatursensors 70 in die Aufnahmeeinrichtung dadurch, dass innerhalb des hohlen Zapfens 60 ein Wärme leitendes Material 65 in Form einer Vergussmasse oder Wärmeleitpaste vorgesehen ist. Der hohle Zapfen 60 selbst weist nur eine geringe Wandstärke (vorzugsweise im Bereich von ca. 0,5 mm) auf. Durch eine solche konstruktive Gestaltung wird erreicht, dass eine gute Wärmeleitung vom Radiator über den Wärmeübertrager (Wärmeleitelement 90) zu dem Temperatursensor 70 durchgehend ermöglicht wird, obwohl kein direkter Kontakt zwischen dem Wärmeleitelement 90 und dem Temperatursensor 70 stattfindet. Eine Ausführungsform, bei der der Temperatursensor 70 steuereinrichtungsseitig der Trennwand 25 platziert ist, hat insbesondere den Vorteil einer guten Abdichtung des Temperatursensors von Luftstrom, Schmutz und Wasser.

Alternativ zu der im Bild dargestellten wäre auch eine Ausführungsform denkbar, bei der ein Teil des Wärmeleitelements 90 durch eine entsprechende Öffnung in der Außenwand (vorzugsweise stirnseitig) des Zapfens 60 direkt an den Temperatursensor 70 herangeführt wird. In einem solchen Fall ist zusätzlich für eine möglichst gute Abdichtung des Einbaubereichs des Temperatursensors 70 zu sorgen.

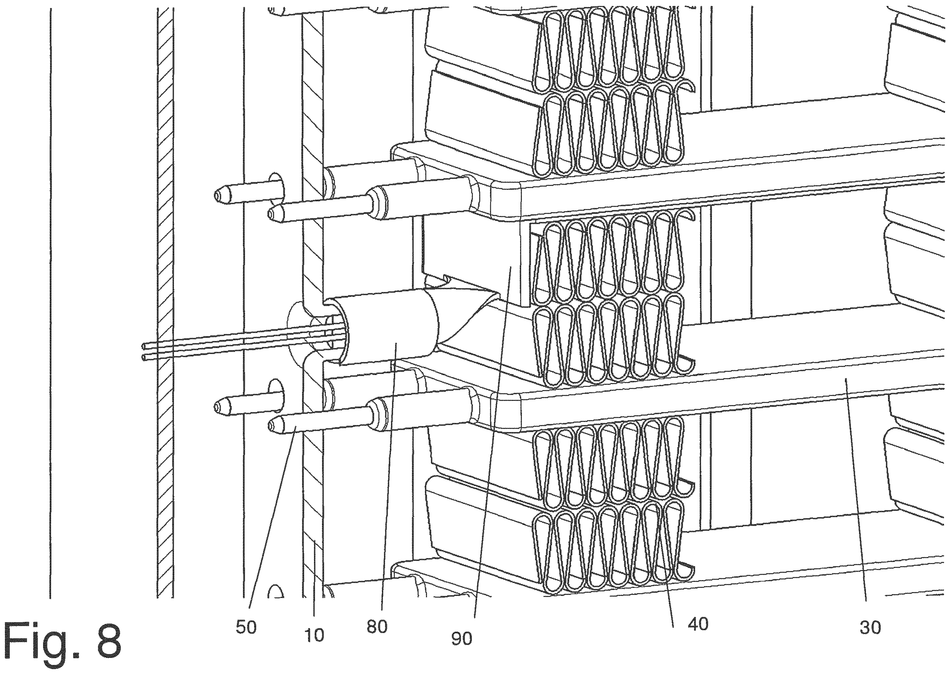

Eine alternative konstruktive Lösung zu den vorstehenden Figuren, bei denen das Wärmeleitelement 90 eine Wellrippe 40 des Radiators kontaktiert, ist im Detail in Fig. 8 dargestellt. Hierbei kontaktiert das Wärmeleitelement 90 direkt eines der PTC-Heizelemente 30 (im Bild das oberhalb des Zapfens mit dem Temperatursensor gezeigte Heizelement). Die weiteren im Bild gezeigten und mit entsprechenden Bezugszeichen versehenen Elemente entsprechen jeweils denjenigen in den vorstehenden Zeichnungen, und auf eine erneute Beschreibung wird deshalb an dieser Stelle verzichtet.

Der geschichtete Aufbau des Heizungsteils in Form eines Heizregisters ist in Fig. 9 schematisch dargestellt. Zwischen den Radiatorelementen 200 sind PTC-Heizelemente 210 angeordnet. Die beiden gezeigten PTC-Heizelemente 210 stehen mit den Radiatorelementen 200 in Wärme leitender Verbindung. Über die Radiatorelemente 200 wird die von dem PTC-Heizelement 210 erzeugte Wärme an die durch die Radiatorelemente 200 strömende Luft abgegeben.

Auf beiden Seiten der PTC-Heizelemente 210 sind Kontaktbleche 220, 230, 240 angeordnet. Über diese Kontaktbleche wird dem PTC-Heizelement 210 Strom zugeführt.

Der in Fig. 9 gezeigte Aufbau stellt nur schematisch ein mögliches Anordnungsprinzip gemäß einer Ausführungsform eines erfindungsgemäßen Heizers dar. Er zeigt nicht die Wärmeleitelemente, die gemäß der Erfindung unterschiedlich angeordnet sein können, so dass sie entweder die Radiatorelemente 200 oder die Heizelemente 210 oder beide (z.B. an deren Kontaktposition) kontaktieren. Vorzugsweise ist der Aufbau unter einer Klemmpressung gehalten, so dass ein besonders guter thermischer und elektrischer Übergang zwischen dem PTC-Heizelement 210 und den Kontaktblechen 220, 230 und 240 besteht. In diesem Fall schließt die Klemmpressung das Wärmeleitelement mit ein, so dass auch hier ein besonders guter thermischer Kontakt besteht. Die Klemmpressung kann zum Beispiel mit zwei Federelementen realisiert werden.

Es kann aber auch ein geklebter Schichtaufbau, der in einem Rahmen gehalten ist, verwendet werden.

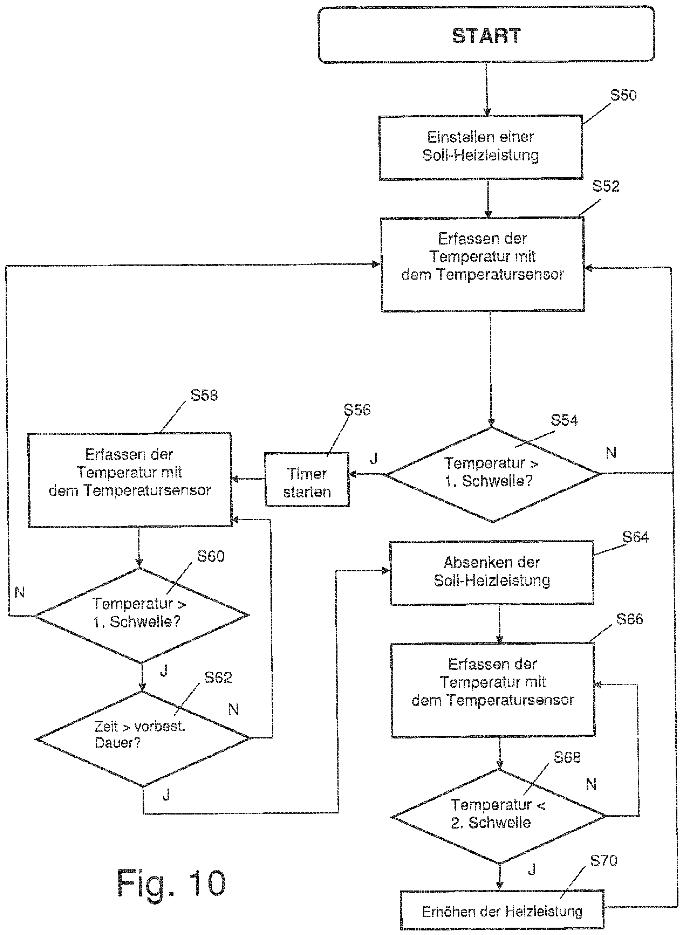

Fig. 10 zeigt ein Ablaufdiagramm beim Betrieb einer erfindungsgemäßen Heizvorrichtung, wobei eine Überhitzung festgestellt wird und als Gegenmaßnahme eine Temperaturregelung gemäß einer Ausführungsform der Erfindung ausgeführt wird.

Zunächst wird im Schritt S50 eine Soll-Heizleistung der Vorrichtung eingestellt. Dies kann entweder manuell geschehen, oder automatisch durch Vorgabe des Heiz-/Klimagerätes, beispielsweise aufgrund der Auswertung bestimmter Umgebungsparameter, insbesondere einer Temperatur und von Vorgaben eines Benutzers, oder aber aufgrund der im Bordnetz vorhandenen elektrischen Leistung, die für andere Zwecke, zum Beispiel Traktion, nicht benötigt wird.

Nach dem Start des Betriebs der Heizvorrichtung wird die Temperatur der PTC-Heizelemente 30 mit Hilfe eines erfindungsgemäßen Temperatursensors 70 permanent überwacht (Schritt S52). Hierbei stellt eine Überwachungseinrichtung im Schritt S54 fest, ob die gemessene Temperatur einen vorgegebenen Schwellwert überschreitet (Schritt S54). Solange dies nicht der Fall ist (S54:N), stellt die Überwachungseinrichtung fest dass ein normaler Betriebszustand vorliegt, und kein Eingreifen erforderlich ist. Der Temperatursensor 70 erfasst weiterhin laufend die Temperatur (S52).

Sobald jedoch eine Erhöhung der Temperatur über den vorgegebenen Schwellwert hinaus festgestellt wird (S54:J), stellt die Überwachungseinrichtung fest, dass eine unzulässig hohe Betriebstemperatur vorliegt. Falls der Schwellwert nur kurzzeitig überschritten wird, kann dies eine Zufallsschwankung der Temperatur sein. Anderenfalls, wenn die unzulässig hohe Temperatur während einer längeren Zeitdauer, zum Beispiel länger als etwa zwei Minuten, besteht, ist jedoch von einer Unterbrechung oder Verlangsamung des Luftstroms, insbesondere von einem Lüfterausfall auszugehen. Um dies zu bestätigen, wird von der Steuereinrichtung im Schritt S56 zunächst ein Timer (Zeitzählung) gestartet und die Temperatur wird im Schritt S58 weiterhin von dem Temperatursensor 70 erfasst. Die Überwachungseinrichtung überprüft im Schritt S60 weiter, ob die Temperatur oberhalb des vorgegebenen Schwellwerts liegt. Wenn im Schritt S54 oder S60 festgestellt wird, dass dies nicht (mehr) der Fall ist (S54:N, S60:N), so wird das Verfahren mit der weiteren Erfassung der Temperatur gemäß Schritt S52 fortgesetzt.

Ergibt jedoch die Überwachung im Schritt S60, dass die Temperatur weiterhin höher als der Schwellwert ist (S60:J), so wird im nachfolgenden Schritt S62 überprüft, ob die von dem Timer gemessene Zeit seit dem ersten Auftreten der den Schwellwert überschreitenden Temperatur größer ist als die festgelegte Zeitdauer. Ist dies (noch) nicht der Fall (S62:N), so wird die Temperatur gemäß Schritt S58 weiterhin erfasst und gemäß Schritt S60 mit der Schwelltemperatur verglichen. Anderenfalls (S62:J) ist davon auszugehen, dass keine zufällige Temperaturschwankung vorliegt, sondern eine Störung des Luftstroms, und Gegenmaßnahmen ergriffen werden müssen. In diesem Fall geht das Verfahren über zum Schritt S64, in welchem die im Schritt S50 vorgegebene (eingestellte) Soll-Heizleistung abgesenkt wird. Vorzugsweise kann das Absenken der Soll-Heizleistung im Schritt S64 auf Null erfolgen, die Heizleistung also komplett abgeschaltet werden. Die Abschaltung oder das Absenken der Heizleistung kann zum Beispiel stufenweise oder kontinuierlich, insbesondere linear, erfolgen. Weiterhin kann je nach Ausführungsform entweder nur ein unmittelbarer betroffener Heizkreis (dessen Temperatursensor die unzulässige Erwärmung festgestellt hat) oder die gesamte Heizvorrichtung in ihrer Leistung reduziert bzw. abgeschaltet werden. Denkbar ist es zum Beispiel auch, eine entsprechende Entscheidung von der absoluten Höhe der festgestellten Temperatur abhängig zu machen, also zum Beispiel die Heizvorrichtung komplett abzuschalten, wenn die festgestellte Temperatur den Schwellwert stark übersteigt. Alternativ ist es auch denkbar, zunächst nur den betroffenen Heizkreis abzuschalten oder dessen Leistung zu reduzieren und die Reduzierung bzw. Abschaltung auf weitere Heizkreise, insbesondere die gesamte Heizvorrichtung auszudehnen, wenn dies über einen vorbestimmten Zeitraum nicht zu einer Absenkung der Temperatur unter den Schwellwert führt. Weiterhin vorzugsweise kann das Vorliegen einer Störung zum Beispiel durch ein akustisches und/oder optisches Signal angezeigt werden.

Gemäß einer bevorzugten Ausführungsform wird die Temperatur nachfolgend im Schritt S66 auch weiterhin mit dem Temperatursensor 70 erfasst. Dabei wird die Temperatur von der Überwachungseinrichtung nach dem Reduzieren oder Abschalten der Heizleistung mit einem zweiten vorbestimmten Schwellwert verglichen, der niedriger als der ursprüngliche Schwellwert ist, bei dessen Überschreiten die Heizleistung abgesenkt wurde. Stellt die Überwachungseinrichtung im Schritt S68 fest, dass die Temperatur jetzt diesen zweiten Schwellwert unterschreitet, so wird der Steuereinrichtung 15 signalisiert, dass die Heizleistung im nachfolgenden Schritt S70 wieder erhöht werden kann. Daran anschließend schreitet das Verfahren zum Schritt S52 zurück.

Auf diese Weise kann gewährleistet werden, dass die Heizung eigenständig auf die maximal zulässige Temperatur geregelt wird, aber keine dauerhafte Abschaltung erfolgt.

Die vorliegende Erfindung ist jedoch nicht auf die im Zusammenhang mit den Figuren vorstehend näher beschriebenen Ausführungsbeispiele beschränkt. Mögliche Modifikationen im Rahmen der Patentansprüche sind dem Fachmann gegenwärtig.

Zusammenfassend, betrifft die vorliegende Erfindung eine elektrische Kraftfahrzeugheizung zur Erwärmung eines Luftstroms, bei der zum Zweck der Vermeidung einer unzulässigen Erwärmung eine Oberflächentemperatur an der Wärmequelle (Heizelement oder Wärme abstrahlender Radiator) indirekt mit Hilfe eines Temperatursensors überwacht wird. Hierzu ist der Temperatursensor mittels eines gut Wärme leitenden Wärmeübertragungselements mit der Wärmequelle verbunden. Der Temperatursensor selbst ist getrennt von dem Heizblock angeordnet. Vorzugsweise erfolgt im Falle einer unzulässigen Erwärmung keine Komplettabschaltung, sondern eine Temperaturregelung. Mit einem Timer wird sichergestellt, dass bei nur kurzfristigen Temperaturschwankungen keine Anpassung der Heizleistung erfolgt. Eine erfindungsgemäße Heizvorrichtung ist insbesondere für den automobiltechnischen Hochvoltbereich geeignet, wie bei Elektro- oder Hybridfahrzeugen der Fall.

## Patentansprüche

1. Elektrische Heizvorrichtung für ein Kraftfahrzeug, zur Erwärmung eines Luftstroms (4), umfassend:
einen Heizblock mit wenigstens einem PTC-Heizelement (30) und wenigstens einem mit dem PTC-Heizelement (30) in Wärme leitendem Kontakt stehenden Radiatorelement (40) zur Wärmeabstrahlung,
ein Gehäuse mit einem Rahmen (20), der den Heizblock aufnimmt,
einen Temperatursensor (70) und
ein Wärmeleitelement (90), das Wärme von dem Heizblock zu dem Temperatursensor (70) leitet,
**gekennzeichnet durch**
eine Steuereinrichtung (15) zum Einstellen der Heizleistung des wenigstens einen PTC-Heizelements (30) und **dadurch, dass**
der Temperatursensor (70) außerhalb eines durch den Rahmen (20) gebildeten Aufnahmeraums (35) für den Heizblock angeordnet ist und mit der Steuereinrichtung (15) verbunden ist.

2. Elektrische Heizvorrichtung nach Anspruch 1, **dadurch gekennzeichnet, dass** das Wärmeleitelement (90) das Radiatorelement (40) kontaktiert.

3. Elektrische Heizvorrichtung nach einem der vorherigen Ansprüche, **dadurch gekennzeichnet, dass** das Wärmeleitelement (90) das PTC-Heizelement (30) kontaktiert.

4. Elektrische Heizvorrichtung nach einem der vorherigen Ansprüche, **dadurch gekennzeichnet, dass** das Gehäuse ein separates Steuergehäuse (10) ausbildet, in dem die Steuereinrichtung (15) angeordnet ist.

5. Elektrische Heizvorrichtung nach einem der vorherigen Ansprüche, wobei das Gehäuse zwischen dem Heizblock und der Steuereinrichtung (15) eine Trennwand (25) ausbildet, die eine Aufnahmeeinrichtung aufweist, in der der Temperatursensor (70) Wärme leitend eingebettet ist.

6. Elektrische Heizvorrichtung nach Anspruch 5, wobei die Aufnahmeeinrichtung durch einen topfförmigen Zapfen (60) gebildet ist, der von einem Anschlussende des Wärmeleitelementes (90) formschlüssig umgriffen ist.

7. Elektrische Heizvorrichtung nach Anspruch 6, **dadurch gekennzeichnet, dass** das Wärmeleitelement (90) ein an dem PTC-Heizelement (70) oder dem Radiatorelement (40) anliegendes Wärmeleitblech ist, das an seinem Anschlussende eine Kontakthülse (80) ausformt, die auf den Zapfen (60) aufgesteckt ist.

8. Elektrische Heizvorrichtung nach einem der vorherigen Ansprüche, **dadurch gekennzeichnet, dass** der Heizblock als Radiatorelemente (40) mehere parallele Heizrippenlagen umfasst, zwischen denen das wenigstens eine PTC-Heizelement (30) aufgenommen ist und dass das Wärmeleitelement (90) als durchgehende Lage des Heizblocks ausgebildet ist.

9. Elektrische Heizvorrichtung nach einem der vorherigen Ansprüche, wobei die Steuereinrichtung (15) ausgebildet ist, die Heizleistung in Abhängigkeit von einer von dem Temperatursensor (70) erfassten Temperatur zu reduzieren.

10. Elektrische Heizvorrichtung nach Anspruch 9, wobei die Steuereinrichtung (15) eine Überwachungseinrichtung einschließt, zum Überwachen, ob die von dem Temperatursensor (70) erfasste Temperatur einen vorbestimmten Temperaturwert überschreitet, und die Heizleistung reduziert, wenn die Überwachungseinrichtung feststellt, dass die von dem Temperatursensor (70) erfasste Temperatur den vorbestimmten Temperaturwert überschreitet.

11. Elektrische Heizvorrichtung nach Anspruch 10, wobei die Steuereinrichtung (15) die Heizleistung erst dann reduziert, wenn die von der Überwachungseinrichtung festgestellte Überschreitung des vorbestimmten Temperaturwertes länger als eine vorbestimmte Zeitdauer andauert.

12. Elektrische Heizvorrichtung nach Anspruch 10 oder 11, wobei
die Überwachungseinrichtung nach dem Reduzieren der Heizleistung überwacht, ob die von dem Temperatursensor (70) erfasste Temperatur einen zweiten vorbestimmten Temperaturwert unterschreitet, wobei der zweite vorbestimmte Temperaturwert niedriger ist als der vorbestimmte Temperaturwert, der zum Reduzieren der Heizleistung führt, und
die Steuereinrichtung (15) ausgebildet ist, die Heizleistung wieder zu erhöhen, wenn die Überwachungseinrichtung feststellt, dass die von dem Temperatursensor (70) erfasste Temperatur den zweiten vorbestimmten Temperaturwert unterschreitet.

13. Elektrische Heizvorrichtung nach einem der Ansprüche 1 bis 12, wobei
der Heizblock (20) mehrere separat ansteuerbare Heizstufen mit jeweils wenigstens einem PTC-Heizelement (30) umfasst, und
die Heizvorrichtung jeweils für eine der Heizstufen einen Temperatursensor (70) und ein Wärmeleitelement (90) umfasst.

## Claims

1. An electrical heating device for a motor vehicle, used for heating an air current (4), comprising:
a heating block comprising at least one PCT heating element (30) and at least one radiator element (40) for radiating heat, which is in heat-conductive contact with the PCT heating element (30),
a housing having a frame (20) which receives the heating block therein,
a temperature sensor (70) and
a heat-conductive element (90) which conducts heat from the heating block to the temperature sensor (70),
**characterized by**
a control unit (15) for adjusting the heating power of the at least one PCT heating element (30), and in that
the temperature sensor (70) is arranged outside of an accommodation space (35) used for the heating block and defined by the frame (20) and is connected to the control unit (15).

2. The electrical heating device according to claim 1, **characterized in that** the heat-conductive element (90) contacts the radiator element (40).

3. The electrical heating device according to one of the preceding claims, **characterized in that** the heat-conductive element (90) contacts the PCT heating element (30).

4. The electrical heating device according to one of the preceding claims, **characterized in that** the housing forms a separate control housing (10) having the control unit (15) arranged therein.

5. The electrical heating device according to one of the preceding claims, wherein the housing defines a partition (25) between the heating block and the control unit (15), said partition (25) including an accommodation unit having the temperature sensor (70) embedded therein in a heat-conductive manner.

6. The electrical heating device according to claim 5, wherein the accommodation unit is defined by a pot-shaped peg (60), which is encompassed by a connection end of the heat-conductive element (90) in form-fit engagement therewith.

7. The electrical heating device according to claim 6, **characterized in that** the heat-conductive element (90) is a heat-conductive plate abutting on the PCT heating element (70) or on the radiator element (40) and forming on the connection end thereof a contact sleeve (80), which is attached to the peg (60).

8. The electrical heating device according to one of the preceding claims, **characterized in that** the heating block comprises as radiator elements (40) a plurality of parallel heating fin layers accommodating between them the at least one PCT heating element (30), and that the heat-conductive element (90) is configured as a continuous layer of the heating block.

9. The electrical heating device according to one of the preceding claims, wherein the control unit (15) is configured for reducing the heating power depending on a temperature measured by the temperature sensor (70).

10. The electrical heating device according to claim 9, wherein the control unit (15) includes a monitoring unit for monitoring whether the temperature measured by the temperature sensor (70) exceeds a predetermined temperature value, and reduces the heating power, if the monitoring unit detects that the temperature measured by the temperature sensor (70) exceeds the predetermined temperature value.

11. The electrical heating device according to claim 10, wherein the control unit (15) will reduce the heating power not until the exceeding of the predetermined temperature value detected by the monitoring unit lasts longer than a predetermined period of time.

12. The electrical heating device according to claim 10 or 11, wherein,
when the heating power has been reduced, the monitoring unit monitors whether the temperature measured by the temperature sensor (70) falls below a second predetermined temperature value, said second predetermined temperature value being lower than the predetermined temperature value resulting in a reduction of the heating power, and
the control unit (15) is configured to re-increase the heating power, if the monitoring unit detects that the temperature measured by the temperature sensor (70) falls below said second predetermined temperature value.

13. The electrical heating device according to one of the claims 1 to 12, wherein
the heating block (20) comprises a plurality of separately controllable heating stages including each at least one PCT heating element (30), and
the heating device comprises a temperature sensor (70) and a heat-conductive element (90) for each of the heating stages, respectively.

## Revendications

1. Dispositif de chauffage électrique pour un véhicule automobile, destiné à échauffer un flux d'air (4) et comprenant :
un bloc chauffant avec au moins un élément chauffant PTC (à coefficient de température positif) (30) et au moins un élément de radiateur (40), qui est en contact de conduction de chaleur avec l'élément chauffant PTC (30) et est destiné à rayonner la chaleur,
un boitier avec un cadre (20), qui accueille le bloc chauffant,
un capteur de température (70), et
un élément de conduction de chaleur (90), qui conduit la chaleur du bloc chauffant au capteur de température (70),
**caractérisé**
**par** un dispositif de commande (15) destiné à régler la puissance de chauffe dudit au moins un élément chauffant PTC (30), et
en ce que le capteur de température (70) est agencé endehors d'un espace d'accueil (35) formé par le cadre (20) et destiné au bloc chauffant, et est relié au dispositif de commande (15).

2. Dispositif de chauffage électrique selon la revendication 1, **caractérisé en ce que** l'élément de conduction de chaleur (90) est en contact avec l'élément de radiateur (40).

3. Dispositif de chauffage électrique selon l'une des revendications précédentes, **caractérisé en ce que** l'élément de conduction de chaleur (90) est en contact avec l'élément chauffant PTC (30).

4. Dispositif de chauffage électrique selon l'une des revendications précédentes, **caractérisé en ce que** le boitier forme un boitier de commande séparé (10) dans lequel est agencé le dispositif de commande (15).

5. Dispositif de chauffage électrique selon l'une des revendications précédentes, dans lequel le boitier forme entre le bloc chauffant et le dispositif de commande (15), une paroi de séparation (25), qui comporte un dispositif d'accueil dans lequel est encastré, de manière à assurer la conduction de chaleur, le capteur de température (70).

6. Dispositif de chauffage électrique selon la revendication 5, dans lequel le dispositif d'accueil est formé par un embout (60) en forme de pot, qui est entouré par complémentarité de formes, par une extrémité de raccordement de l'élément de conduction de chaleur (90).

7. Dispositif de chauffage électrique selon la revendication 6, **caractérisé en ce que** l'élément de conduction de chaleur (90) est une tôle de conduction de chaleur, qui s'appuye contre l'élément chauffant PTC (30) et l'élément de radiateur (40), et qui, à son extrémité de raccordement, forme une douille de contact (80) enfichée sur l'embout (60).

8. Dispositif de chauffage électrique selon l'une des revendications précédentes, **caractérisé en ce que** le bloc chauffant comprend en guise d'éléments de radiateur (40), plusieurs couches d'ailettes chauffantes parallèles, entre-lesquelles est reçu ledit au moins un élément chauffant PTC (30), et **en ce que** l'élément de conduction de chaleur (90) est réalisé sous forme de couche continue du bloc chauffant.

9. Dispositif de chauffage électrique selon l'une des revendications précédentes, dans lequel le dispositif de commande (15) est conçu pour réduire la puissance de chauffe en fonction d'une température relevée par le capteur de température (70).

10. Dispositif de chauffage électrique selon la revendication 9, dans lequel le dispositif de commande (15) englobe un dispositif de surveillance pour surveiller si la température relevée par le capteur de température (70) dépasse une valeur de température prédéterminée, et réduit la puissance de chauffe lorsque le dispositif de surveillance constate que la température relevée par le capteur de température (70) dépasse la valeur de température prédéterminée.

11. Dispositif de chauffage électrique selon la revendication 10, dans lequel le dispositif de commande (15) réduit la puissance de chauffe seulement lorsque le dépassement de la valeur de température prédéterminée constaté par le dispositif de surveillance, dure plus longtemps qu'une durée prédéterminée.

12. Dispositif de chauffage électrique selon la revendication 10 ou la revendication 11, dans lequel le dispositif de surveillance surveille, après la réduction de la puissance de chauffe, si la température relevée par le capteur de température (70), passe en-dessous d'une deuxième valeur de température prédéterminée, la deuxième valeur de température prédéterminée étant plus basse que la valeur de température prédéterminée, qui conduit à la réduction de la puissance de chauffe, et
le dispositif de commande (15) est configuré pour augmenter à nouveau la puissance de chauffe lorsque le dispositif de surveillance constate que la température relevée par le capteur de température (70) passe en-dessous de la deuxième valeur de température prédéterminée.

13. Dispositif de chauffage électrique selon l'une des revendications 1 à 12, dans lequel
le bloc chauffant (20) comprend plusieurs étages de chauffe avec chacun au moins élément chauffant PTC (30), qui pouvent être commandés séparément, et
le dispositif de chauffage comprend respectivement pour un des étages de chauffe, un capteur de température (70) et un élément de conduction de chaleur (90).
